# EUROPEAN PATENT SPECIFICATION

(11) **EP 4 341 895 B1**
(45) Date of publication and mention of the grant of the patent: **21.10.2026**
(21) Application number: 22729415.4
(22) Date of filing: 09.05.2022
(51) Int. Cl.: G06T 7/13, G06T 7/62, G06T 7/194, G06T 7/155

(54) **METHOD FOR DETECTING AND REMOVING PERSONNEL INTERFERENCE WHILE MEASURING VOLUME OF AN OBJECT**
VERFAHREN ZUR ERKENNUNG UND BESEITIGUNG VON PERSONENINTERFERENZEN BEI DER MESSUNG DES VOLUMENS EINES OBJEKTS
PROCÉDÉ DE DÉTECTION ET D'ÉLIMINATION D'INTERFÉRENCE DE PERSONNEL PARALLÈLEMENT À LA MESURE DU VOLUME D'UN OBJET

(30) Priority: 17.05.2021 CN 202110535180
(43) Date of publication of application: 27.03.2024
(73) Proprietor: Mettler Toledo (Changzhou) Measurement Technology Ltd., Changzhou, Jiangsu 213125 (CN); Mettler-Toledo (Changzhou) Precision Instruments Ltd., Changzhou, Jiangsu 213125 (CN); Mettler-Toledo International Trading (Shanghai) Co., Ltd., Shanghai 200131 (CN)
(72) Inventor: CAO, Conghan, hangzhou, Jiangsu 213125 (CN); FANG, Chao, hangzhou, Jiangsu 213125 (CN); CUI, Jindong, hangzhou, Jiangsu 213125 (CN); WANG, Shenhui, hangzhou, Jiangsu 213125 (CN); ZHANG, Song, hangzhou, Jiangsu 213125 (CN); SONG, Hongqing, hangzhou, Jiangsu 213125 (CN)
(74) Representative: Mettler-Toledo
(86) International application number: PCT/CN2022/091686
(87) International publication number: WO 2022/242490

(56) References cited:
- US-B2- 7 522 763
- WU ZHENGYANG ET AL: "Robust video segment proposals with painless occlusion handling", 2015 IEEE CONFERENCE ON COMPUTER VISION AND PATTERN RECOGNITION (CVPR) IEEE, 7 June 2015 (2015-06-07), pages 4194 - 4203, XP032793873, ISSN: 1063-6919, [retrieved on 20151014], DOI: 10.1109/CVPR.2015.7299047
- JADHAV TUSHAR R ET AL: "Volume measurement of object using computer vision", 2016 IEEE INTERNATIONAL CONFERENCE ON RECENT TRENDS IN ELECTRONICS, INFORMATION & COMMUNICATION TECHNOLOGY (RTEICT), IEEE, 20 May 2016 (2016-05-20), pages 1792 - 1795, XP033038231, DOI: 10.1109/RTEICT.2016.7808143
- PREPRINT ET AL: "Context-Aware Automatic Occlusion Removal Computer Vision View project Signal Cup 2020 View project CONTEXT-AWARE AUTOMATIC OCCLUSION REMOVAL", 7 May 2019 (2019-05-07), XP055965340, Retrieved from the Internet <URL:https://www.researchgate.net/profile/Dumindu-Tissera/publication/332932341_Context-Aware_Automatic_Occlusion_Removal/links/5d3f157d4585153e592bc093/Context-Aware-Automatic-Occlusion-Removal.pdf> [retrieved on 20220927]

## Description

### Technical Field

The present invention relates to the field of object volume measurement technologies, and in particular, to a method for detecting and removing personnel interference while measuring a volume of an object.

### Background Art

For measuring the volume of an object, the object has to be carried by a personnel, and while capturing a picture of the object for volume measurement, the personnel might intervene in the field of view of the picture capturing device and an obtained image might have interference, and the object measurement data will be inaccurate.

In a conventional method, skin colour or pose of the personnel detected using deep learning are used to process the captured image and remove any interference present in the captured image. However, the processing time of these methods are longer and the method involves many steps to recognize and remove the personnel interference. In addition, a body part of a person handling the object can be captured in a picture, and other factors such as ambient light might affect skin colour and object colour, and the like. Therefore, it becomes difficult to detect, and it leads to false detection or missed detection.

The field of automated volume measurement and the field of automated identification and removal of unwanted objects shown in an image are vivid technological fields. For example, Jadhav Tushar R. et al., "Volume measurement of object using computer vision", IEEE International conference on recent trends in electronics information communication technology, May 20-21, 2016, India, pages 1792-1795, discloses a volume measurement method in which images of an object that is placed on a turn table are acquired by a single digital camera, and corresponding processing of the acquired images. Kahatapitiya Kumara et al., "Context-aware automatic occlusion removal", arXiv:1905.0271v1 Preprint, May 7, 2019, discloses a methodology to identify objects that do not relate to the image context as occlusions and remove them, reconstructing the space occupied coherently, wherein the proposed system detects occlusions by considering the relation between foreground and background object classes. US 752276382 relates to machine vision inspection systems and discloses a method that allows for high precision measurement of features that are partially obscured by an extraneous object, wherein the method is based on the determination of the location of edge points of the features.

### Summary of invention

In view of the foregoing problems in the prior art, the present invention discloses a method for detecting and removing personnel interference while measuring a volume of an object, which can effectively improve efficiency of the object volume measurement.

Specifically, the present invention discloses the method for detecting and removing personnel interference while measuring a volume of an object including the following steps:
S1: obtaining an image of the object using a camera, removing a background information of the image, and converting the image into a binary image;
S2: detecting an outline of the object as shown in the binary image from the binary image, and determining whether the outline extends towards a boundary of a field of view of the camera;
and if the outline does not extend towards the boundary of the field of view, performing a step S3 of measuring the volume of the object ;else performing a step S4 of determining an extending part, the extending part being defined by a part of the outline that extends towards the boundary of the field of view, and removing the extending part from the object shown in the binary image;
S5: measuring the volume of the object based on an outline of the object obtained after the extending part is removed, and issuing a class 1 warning indicating a personnel interference.

According to an embodiment of the present invention, the step S4 of determining an extending part and removing the extending part comprises further using a morphological method if the extending part from the outline of the object is removable.

According to an embodiment of the present invention, in step S2, the outline is compared with the boundary of the field of view, and whether the outline extends towards the boundary of the field of view is determined.

According to an embodiment of the present invention, whether the outline is extending towards the boundary of the field of view or not is determined based on convex and concave characteristics of the outline.

According to an embodiment of the present invention, in step S4, if the extending part is not removable then a step S6 of issuing a class 2 warning and then a step S7 of ending the measurement is performed.

As mentioned above, the class 1 warning in step S5 is to deliver a warning regarding personnel interference.

The class 2 warning in step S6 is to deliver a warning regarding personnel interference and/or that the object extends beyond the boundary of the field of view.

The method for detecting and removing personnel interference while measuring a volume of an object that is provided in the present invention can effectively remove interference of hands and other interfering limb parts of the personnel assisting in the process of volume measurement, by locating, selecting and removing an interference part based on a degree of interference, to obtain a correct measurement result, thereby effectively improving efficiency of measuring object volume.

### Brief description of drawings

The accompanying drawings are included to provide a further understanding of the present invention that are incorporated in and constitute a part of the present application. The drawings show various embodiments of the present invention, and serve together with the description for describing the principles of the present invention in detail.
- Fig. 1: shows a flowchart of a method for detecting and removal of personnel interference while measuring a volume of an object according to an embodiment of the present invention
- Fig. 2-1: shows an image of an object
- Fig. 2-2: shows a result obtained after removing background information of the image shown in Fig. 2-1 and converting the image shown in Fig. 2-1 into a binary image
- Fig. 3-1: shows a binary image of an object with personnel interference
- Fig. 3-2: shows a result obtained after an extending part of an outline shown in the image of Fig. 3-1 is removed
- Fig. 4: shows a binary image of an object with interference.

### Description of embodiments

It should be noted that, in case of no conflict, the embodiments and the features thereof in the present application can be combined with each other.

The technical solution disclosed in the embodiments of the present application will be clearly and completely described below in conjunction with the drawings in the embodiments of the present application. Apparently, the described embodiments are merely some rather than all of the possible embodiments of the present application. The following description of at least one exemplary embodiment is merely illustrative, and in no way serves as any limitation on the present application and application or use thereof.

It should be noted that the terms used herein are merely for describing specific implementations, and are not intended to limit the exemplary implementations according to the present application. As used herein, unless the context clearly indicates otherwise, the singular forms are intended to include the plural forms as well. Moreover, it should also be understood that when the terms "include(s)" and/or "comprise(s)" are used in the description, it indicates the presence of features, steps, operations, devices, components, and/or combinations thereof.

Unless specifically stated otherwise, the relative arrangement of components and steps, numerical expressions and numerical values set forth in these embodiments do not limit the scope of the present application. In addition, it should be understood that, for ease of description, the sizes of various parts shown in the drawings are not drawn to scale. The technologies, methods, and devices known to those of ordinary skill in the related art may not be discussed in detail, but where appropriate, the technologies, methods, and devices should be regarded as part of the specification. In all examples shown and discussed here, any specific value should be interpreted as merely exemplary and not as limiting. Therefore, other examples of the exemplary embodiment may have different values. It should be noted that similar reference signs and letters refer to similar items in the following drawings. Therefore, once a specific item is defined in one of the drawings, it need not be further discussed in subsequent drawings.

In the description of the present application, it should be understood that, an orientation or position relationship indicated by orientation terms such as "front, rear, upper, lower, left, and right" "transverse, longitudinal, vertical, and horizontal" , and "top and bottom" is usually based on an orientation or position relationship shown in the drawings, which is only for the convenience of describing the present application and simplifying the description. Unless otherwise stated, these orientation terms do not indicate or imply that an apparatus or element referred to must have a specific orientation or be constructed and operated in a specific orientation, so that the orientation terms cannot be understood as a limitation of the protection scope of the present application; and the orientation terms "inner and outer" refer to the inside and outside relative to the contour of each component itself.

For convenience of description, spatially relative terms such as "on" , "above" , "on the top surface" , "upper" , etc. can be used herein to describe a spatial position relationship between a device or a feature shown in the figure and other devices or features. It should be understood that spatially relative terms are intended to include different orientations in use or operation in addition to the orientation of the device described in the figure. For example, if the device in the figure is inverted, the device described as "on other devices or structures" or "above other devices or structures" will then be positioned as "under other devices or structures" or "below other devices or structures" . Therefore, the exemplary term "above" may comprise two orientations "above" and "below" . The device may also be positioned in other different manners (rotated by 90 degrees or in other orientations), and spatially relative description used here is explained accordingly.

In addition, it should be noted that the use of words such as "first" and "second" to define parts is merely for the convenience of distinguishing between corresponding parts. Unless otherwise stated, the above words have no special meaning and therefore cannot be understood as limitation of the protection scope of the present application. Furthermore, although the terms used in the present application are selected from well-known common terms, some of the terms mentioned in the specification of the present application may have been selected by the applicant according to his or her determination, and the detailed meaning thereof is described in the relevant section described herein. Furthermore, the present application must be understood, not simply by the actual terms used but also by the meanings encompassed by each term.

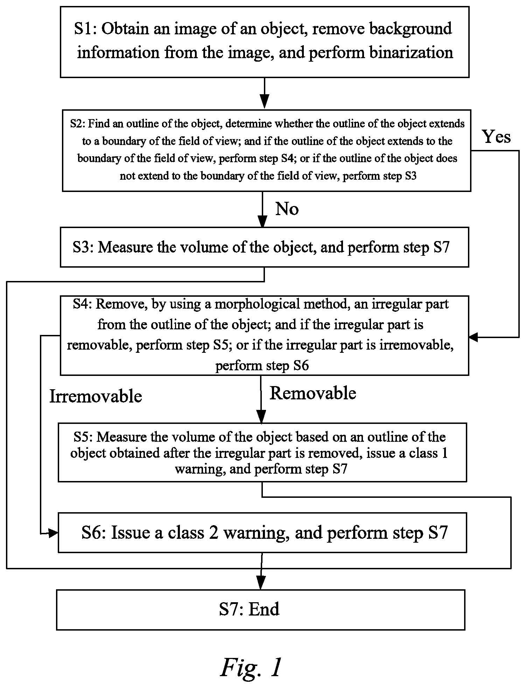

Fig. 1 shows a flowchart of a method for detecting and removing personnel interference while measuring a volume of an object according to an embodiment of the present invention. As shown in the figure, the method includes the steps as follows:
S1: Obtain an image of an object using a camera, remove a background information of the image, and convert the obtained image into a binary image.
S2: Detect an outline of the object as shown in the binary image from the binary image, and determine whether the outline of the object extends to a boundary of the field of view of the camera.

If the outline of the object does not extend towards the boundary of the field of view, perform step S3 to measure the volume of the object; else perform step S4 of removing an extending (also called irregular) part from the outline of the object.

Then, perform step S5 to measure the volume of the object based on an outline of the object which is obtained after removing the extending part, and issuing a class 1 warning.

Generally, the boundary of the field of view refers to a boundary of the entire image containing the object.

Preferably, in step S2, the outline of the object as shown in the binary image is detected, and the outline of the object is compared with the boundary of the field of view, to determine whether the outline of the object is extending towards the boundary of the field of view.

With respect to step S3, it is determined whether the outline of the object is extending or not, before measuring the volume of the object. It is understandable that step S3 can be performed only when there is no personnel interference and the object does not extend and connect to the boundary of the field of view. If the object has a regular outline, for example, the outline of the object is rectangular, subsequent measurement work becomes easier. More preferably, whether the outline of the object is rectangular is determined based on the similarity between a rectangle and a fitting figure of the outline.

Conventionally, if there is no personnel interference, volume measurement for the object is completed by performing step S1, S2 and S3, and no additional calculation is required. A calculation amount of the remaining steps is extremely small, and is less than 1% of a calculation amount of total measurement. Therefore, the method for detecting and removing personnel interference while measuring a volume of the object provided with the present invention can effectively improve efficiency of object volume measurement, with only small increase in workload.

Preferably, step S4 of removing the extending part from the outline of the object is performed by using a morphological method.

Preferably, in step S4, if the extending part is not removable then step S6 is performed by issuing a class 2 warning and then perform step S7 of ending the measurement.

Preferably, the class 1 warning in step S5 is to deliver a warning regarding personnel interference. A system may consider to obtain a picture of the object again after interference is removed.

Preferably, the class 2 warning in step S6 is to deliver a warning regarding personnel interference and/or that the object is extending beyond the boundary of the field of view. A system needs to obtain a picture of the object again after interference is removed or when the object is correctly placed.

Embodiment 1: This embodiment discloses a process of measuring the volume of the object with no personnel interference.

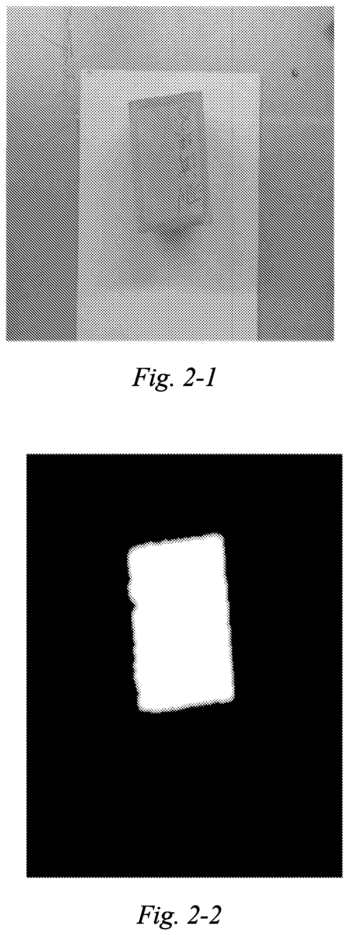

Fig. 2-1 shows an image of an object obtained by capturing using a camera. Fig. 2-2 shows a result obtained after the background information is removed from the image and after converting the image obtained to a binary image. As shown in the figures, a method for detecting and removing personnel interference while measuring the volume of an object is provided by the present invention.

S1: Obtain an image of an object. Reference is made to FIG. 2-1. Background information is removed from the image, and the image is converted into a binary image. This process gives the entire image a distinctive black and white effect. After the conversion into binary image is completed, the images as shown in Fig. 2-2 is obtained.

S2: Find an outline of the object, and determine whether the outline of the object extends towards a boundary of the field of view. As shown in Fig. 2-2, the outline of the object is an outer edge of a white image, and the boundary of the field of view is an outer edge of a black region. Apparently, the outline of the object is not in contact with the boundary of the field of view, step S3 is performed.

S3: Measure the volume of the object.

### Embodiment 2:

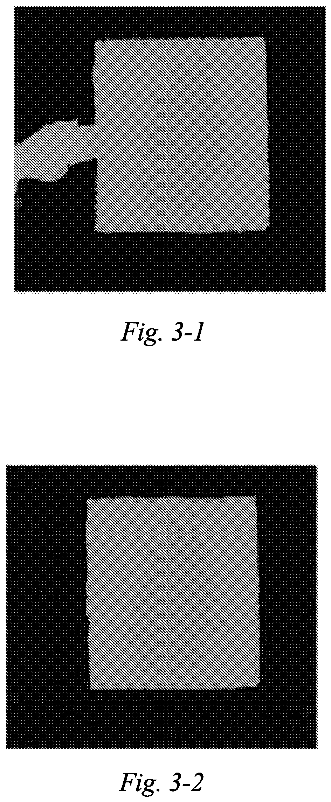

Fig. 3-1 shows a binary image of an object with personnel interference.

Fig. 3-2 shows a result obtained after an extending part of an outline shown in the image of Fig. 3-1 is removed by performing a method for detecting and removing personnel interference while measuring the volume of an object provided by the present invention.

S1: Obtain an image of an object, remove a background information of the image, and convert the image into a binary image. Reference is made to Fig. 3-1.

S2: Detect an outline of the object as shown in the binary image, and determine whether the outline of the object extends towards a boundary of the field of view. In Fig. 3-1, the outline of the object is an outer edge of a grey image in the middle, and the boundary of the field of view is an outer edge of a black region. Apparently, the outline of the binary image of the object intersects with the boundary of the field of view, then step S4 is performed.

S4: Remove an extending part from the outline of the object, for example by using a morphological method. Referring to Fig. 3-2, after the extending part has been removed from the outline of the object, then step S5 is performed.

S5: Measure the volume of the object based on an outline of the object obtained after the extending (irregular) part is removed. A class 1 warning is issued, to deliver a warning that there is personnel interference.

Embodiment 3: In Embodiment 3, a measurement result cannot be obtained, and an image of the object needs to be obtained again after personnel interference is removed or after a position of the object is adjusted.

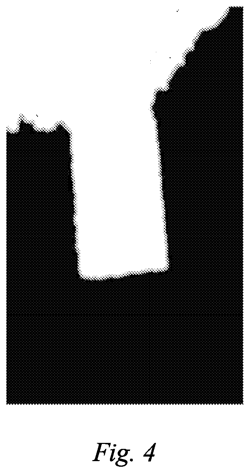

Fig. 4 shows a binary image of an object with interference. As shown in the figure, a method for detecting and removing personnel interference while measuring the volume of an object is provided in the present invention.

S1: Obtain an image of an object, remove a background information of the image, and convert the image into a binary image. Reference is made to Fig. 4.

S2: Detect an outline of the object as shown in the binary image, and determine whether the outline of the object extends towards a boundary of the field of view. In Fig. 4, the outline of the object is an outer edge of a grey image in the middle, and the boundary of the field of view is an outer edge of a black region. Apparently, the outline of the object intersects with the boundary of the field of view, then step S4 is performed.

S4: If an extending part cannot be removed from the outline of the object, e.g., by using a morphological method, then step S6 is performed.

S6: Issue a class 2 warning to deliver a warning regarding a personnel interference and/or that the object extends beyond the boundary of the field of view, and step S7 is performed.

S7: End of the measurement.

The anti-personnel-interference object volume measurement method provided in the present invention can effectively detect interference of hands and other limb parts of measurement assisting personnel in the process of volume measurement, locate an interference region, and perform determination based on a degree of interference. When the object to be measured is not severely interfered, an interference region thereof can be removed, and a correct measurement result can be obtained. Alternatively, when the object to be measured is severely interfered or incorrectly placed, a system is warned to capture a picture of the object again.

## Claims

1. A computer-implemented method for detecting and removing personnel interference while measuring a volume of an object, said method comprising:
a step (S1) of obtaining an image of the object using a camera, removing a background information of the image, and converting the obtained image into a binary image;
a step (S2) of detecting an outline of the object as shown in the binary image from the binary image, and determining whether the outline extends to a boundary of a field of view of the camera;
**characterized in that**
if the outline does not extend towards the boundary of the field of view, performing a step (S3) of measuring the volume of the object;
else performing a step (S4) of determining an extending part that is defined by a part of the outline that extends to the boundary of the field of view, and removing the extending part from the object shown in the binary image; and
performing a step (S5) of measuring the volume of the object based on an outline of the object obtained after the extending part is removed, and issuing a class 1 warning indicating personnel interference.

2. The method according to claim 1, wherein in the step (S2) of detecting an outline and determining whether the outline extends to a boundary of a field of view of the camera, the outline is compared with the boundary of the field of view to determine whether the outline is extending towards the boundary of the field of view.

3. The method according to claim 1, wherein whether the outline extends to the boundary of the field of view is determined based on convex and concave characteristics of the outline.

4. The method according to claim 1, wherein the step (S4) of determining an extending part and removing the extending part further comprises using a morphological method for removing the extending part from the object shown in the binary image.

5. The method according to claim 1, wherein in the step (S4) of determining an extending part and removing the extending part, if the extending part is not removable then performing a step (S6) of issuing a class 2 warning and then performing a step (S7) of ending the measurement of the volume, wherein the class 2 warning delivers a warning indicating personnel interference and/or that the object is extending beyond the boundary of the field of view.

## Patentansprüche

1. Computerimplementiertes Verfahren zum Erkennen und Entfernen von Beeinflussungen durch das Personal während der Messung eines Volumens eines Objekts, wobei das besagte Verfahren Folgendes umfasst:
einen Schritt (S1) zum Erlangen eines Bildes des Objekts unter Verwendung einer Kamera, Entfernen einer Hintergrundinformation aus dem Bild und Umwandeln des so erlangten Bildes in ein binäres Bild;
einen Schritt (S2) zum Erkennen im binären Bild einer Kontur des im binären Bild dargestellten Objektes und zum Bestimmen, ob sich die Kontur bis zu einer Sichtfeldgrenze der Kamera erstreckt;
**dadurch gekennzeichnet, dass**
falls sich die Kontur nicht bis zur Sichtfeldgrenze erstreckt, ein Schritt (S3) der Messung des Volumens des Objekts durchgeführt wird;
anderenfalls ein Schritt (S4) durchgeführt wird zum Bestimmen eines sich erstreckenden Teils, der durch einen Teil der Kontur definiert ist, der sich bis zur Sichtfeldgrenze erstreckt, sowie zum Entfernen des sich erstreckenden Teils vom im Binärbild dargestellten Objekt, und Durchführung eines Schritts (S5) zum Messen des Volumens des Objekts basierend auf einer Kontur des Objekts, die nach dem Entfernen des sich erstreckenden Teils erlangt wurde, und Ausgabe einer Warnung der Klasse 1, die auf eine Beeinflussung durch das Personal hinweist.

2. Das Verfahren nach Anspruch 1, wobei im Schritt (S2) zum Erkennen einer Kontur und zum Bestimmen, ob sich die Kontur bis zu einer Sichtfeldgrenze der Kamera erstreckt, die Kontur mit der Sichtfeldgrenze abgeglichen wird, um zu bestimmen, ob sich die Kontur bis zu der Sichtfeldgrenze erstreckt.

3. Das Verfahren nach Anspruch 1, wobei anhand von konvexen und konkaven Charakteristika der Kontur bestimmt wird, ob sich die Kontur bis zur Sichtfeldgrenze erstreckt.

4. Das Verfahren nach Anspruch 1, wobei der Schritt (S4) zum Bestimmen eines sich erstreckenden Teils und zum Entfernen des sich erstreckenden Teils ferner die Verwendung eines morphologischen Verfahrens zum Entfernen des sich erstreckenden Teils aus dem im Binärbild dargestellten Objekt umfasst.

5. Das Verfahren nach Anspruch 1, wobei, wenn der sich erstreckende Teil in dem Schritt (S4) zum Bestimmen eines sich erstreckenden Teils und zum Entfernen des sich erstreckenden Teils nicht entfernbar ist, ein Schritt (S6) zur Ausgabe einer Warnung der Klasse 2 und ein Schritt (S7) zum Beenden der Messung des Volumens durchgeführt werden, wobei die Warnung der Klasse 2 eine Warnung ausgibt, die auf eine Beeinflussung durch das Personal und/oder darauf hinweist, dass sich das Objekt über die Sichtfeldgrenze hinaus erstreckt.

## Revendications

1. Procédé mis en œuvre par ordinateur pour détecter et éliminer une interférence causée par le personnel lors de la mesure d'un volume d'un objet, ledit procédé comprenant :
une étape (S1) comprenant l'obtention d'une image de l'objet à l'aide d'un appareil photo, l'élimination d'une information d'arrière-plan de l'image, et la conversion de l'image ainsi obtenue en une image binaire ;
une étape (S2) comprenant la détection d'un contour de l'objet tel que représenté dans l'image binaire à partir de l'image binaire, et la détermination si le contour s'étend jusqu'à une limite d'un champ de vision de l'appareil photo ;
**caractérisé en ce que**
si le contour ne s'étend pas jusqu'à la limite du champ de vision, ledit procédé comprend une étape (S3) comprenant le mesurage du volume de l'objet ;
sinon, ledit procédé comprend une étape (S4) comprenant la détermination d'une partie d'extension définie par une partie du contour s'étendant jusqu'à la limite du champ de vision, et l'élimination de la partie d'extension de l'objet représenté dans l'image binaire, une étape (S5) comprenant le mesurage du volume de l'objet sur la base d'un contour de l'objet obtenu après l'élimination de la partie d'extension, et une émission d'un avertissement de classe 1 indiquant une interférence de personnel.

2. Procédé selon la revendication 1, dans lequel à l'étape (S2) comprenant la détection d'un contour et la détermination si le contour s'étend jusqu'à une limite d'un champ de vision de l'appareil photo, le contour est comparé à la limite du champ de vision pour déterminer si le contour s'étend jusqu'à la limite du champ de vision.

3. Procédé selon la revendication 1, dans lequel il est déterminé si le contour s'étend jusqu'à la limite du champ de vision sur la base de caractéristiques convexes et concaves du contour.

4. Procédé selon la revendication 1, dans lequel l'étape (S4) comprenant la détermination d'une partie d'extension et l'élimination de la partie d'extension comprend en outre l'utilisation d'un procédé morphologique pour éliminer la partie d'extension de l'objet représenté dans l'image binaire.

5. Procédé selon la revendication 1, dans lequel, si la partie d'extension ne peut pas être éliminée lors de l'étape (S4) comprenant la détermination d'une partie d'extension et l'élimination de la partie d'extension, une étape (S6) est réalisée comprenant l' émission d'un avertissement de classe 2 et une étape (S7) est réalisée comprenant l'interruption de la mesure du volume, dans lequel l'avertissement de classe 2 délivre un avertissement indiquant une interférence de personnel et/ou que l'objet s'étend au-delà de la limite du champ de vision.
